# EUROPÄISCHE PATENTANMELDUNG

(11) **EP 4 717 465 A2**
(43) Veröffentlichungstag der Anmeldung: **01.04.2026**
(21) Anmeldenummer: 25203338.6
(22) Anmeldetag: 19.09.2025
(51) Int. Cl.: B42D 25/29, B42D 25/369, B42D 25/373, B42D 25/378, B42D 25/41, B41M 3/14, C09D 11/037, C09D 11/101

(54) **VERFAHREN ZUR HERSTELLUNG EINES WERTDOKUMENTS UND WERTDOKUMENT**

(30) Priorität: 23.09.2024 DE 102024127365
(71) Anmelder: Giesecke+Devrient Currency Technology GmbH, 81677 München (DE)
(72) Erfinder: DEPTA, Georg, 81677 München (DE); MENGEL, Christoph, 81677 München (DE); LESCH, Harald, 81677 München (DE)
(74) Vertreter: Patentanwälte Geyer, Fehners & Partner mbB

(57) **Zusammenfassung**

Die Erfindung betrifft ein Verfahren zur Herstellung eines Wertdokuments (1), wie einer Banknote, einem Scheck, einer Kredit- oder sonstige Zahlungskarte, einer Ausweiskarte oder dergleichen. Es wird ein Substratkörper (2), der eine Vorderseite (3) und eine Rückseite (4) hat, bereitgestellt, und eine Druckschicht (6) wird mit einer ersten Tinte (5) und einer zweiten Tinte (15), die beide magnetisch ausrichtbare Pigmente aufweisen, auf die Vorderseite (3) des Substratkörpers (2) aufgedruckt. Die magnetisch ausrichtbaren Pigmente werden mit einer Magnetvorrichtung (11) ausgerichtet und anschließend mit einer Aushärtungsvorrichtung (13) durch Aushärten einer Matrix im ausgerichteten Zustand fixiert.-Mindestens die erste Tinte (5) wird in einem Digitaldruckprozess mittels eines ersten Druckkopfs (7) gedruckt, der die erste Tinte (5) gemäß einem Punktraster tröpfchenförmig abgibt, so dass die Druckschicht (6) mindestens hinsichtlich der ersten Tinte (5) als Digitaldruckschicht ausgebildet wird, wobei die erste Tinte (5) und die zweite Tinte (15) zwei unterschiedliche Farben aufweisen, und die magnetisch ausrichtbaren Pigmente jeweils einen Mehrschichtverbund umfassen, der mindestens eine magnetische Schicht umfasst.

## Beschreibung

Die Erfindung bezieht sich auf ein Verfahren zur Herstellung eines Wertdokuments, wie einer Banknote, einem Scheck, einer Kredit- oder sonstige Zahlungskarte, einer Ausweiskarte oder dergleichen. Es wird ein Substratkörper, der eine Vorderseite und eine Rückseite hat, bereitgestellt und eine Druckschicht wird mit einer Tinte, die magnetisch ausrichtbare Pigmente aufweist, auf die Vorderseite des Substratkörpers aufgedruckt. Im Anschluss werden die magnetisch ausrichtbaren Pigmente mit einer Magnetvorrichtung ausgerichtet und anschließend mit einer Aushärtevorrichtung durch Aushärten einer Matrix im ausgerichteten Zustand fixiert.

In bekannten Verfahren werden metallische, selektiv-reflektive oder reflektive Effektpigmente über Siebdruck verdruckt. Auf dem Markt erhältliche Düsen für den Tintenstrahldruck ermöglichen aber immer mehr auch den Einsatz von Digitaldruckverfahren für diese Effektpigmente.

Bei bekannten Digitaldruckverfahren wird ein Druckbild direkt aus einer Datei in einer Steuereinheit in eine Druckmaschine übertragen. Im Digitaldruckverfahren wird also keine statische Druckform wie im Siebdruck benötigt. Arten der Digitaldruckverfahren sind Elektrofotografie, Laserdruck oder Tintenstrahldruck. Allen Arten ist es gemein, dass das Druckbild mit geringem mechanischem Druck bzw. beispielsweise beim Tintenstrahldruck sogar kontaktlos übertragen wird (non-impact printing).

Die EP 2 464 696 A1 beschreibt den Tintenstrahldruck von Effektpigmenten, insbesondere Perlglanzpigmenten. Die EP 3 034 311 B1 offenbart, durch Tintenstrahldruck von Effektpigmenten Sicherheitsmerkmale zu drucken. Die WO 2023 / 069 440 A1 beschreibt den elektrostatischen Druck von Effektpigmenten und die WO 2023 / 021 128 A1 offenbart den Tintenstrahldruck von UV-härtbarer Effektpigmentfarbe.

In der Regel weisen magnetisch ausrichtbare Pigmente eine breite Größenverteilung auf. Insbesondere für den Tintenstrahldruck ist dies problematisch, da größere Pigmente unter Umständen die Düsen verstopfen könnten. Es sind daher Lehren bekannt, die es ermöglichen Pigmente mit monomodaler Größenverteilung zu erzeugen. Die EP 4 163 121 A1 beschreibt die Erzeugung monomodaler Effektpigmente mit einem wasserablösbaren Prägelack und die WO 2021 / 115 628 A1 mit einer wasserlöslichen Polymerschicht.

Die WO 2011 / 092 502 A2 offenbart die Erzeugung von magnetischen Mustern mit Hilfe von magnetischen Flussdichten eines Permanentmagneten im Zusammenspiel mit einer weichmagnetischen Auflagefläche. Die magnetischen Flussdichten am Permanentmagneten messen 3000 bis 12000 Gauß, gemessen an der Oberfläche des Permanentmagneten und nehmen mit dem Abstand stark ab. Beispielsweise die WO 2008 / 139 373 A1 beschreibt eine individuelle Ausrichtung von Elektromagneten. Ein Elektromagnet wird mit einer gravierten Platte kombiniert, um eine festgelegte Markierung zu erzeugen. Die DE 10 2017 202 747 A1 offenbart ein Array von Elektromagneten, angeordnet in einem Rotationskörper, die individuell ein- und ausgeschaltet werden können, sodass die Richtung und die Stärke des Magnetfeldes individuell einstellbar ist. Auch die WO 2020 / 127 595 A1 beschreibt ein modifiziertes Array von Elektromagneten.

Die EP 2 468 423 A1 beschreibt eine erste Teilaushärtung einer Beschichtung aus magnetisch ausrichtbaren Pigmenten bei bewegtem Substrat und angelegtem Magnetfeld durch Laserstrahlen, sodass ein Bild entsteht. Dabei wird der Laser auch auf einer Linie quer zur Bewegungsrichtung des Substrats bewegt. Ebenfalls offenbart ist eine zweite Magnetisierung mit anschließender Härtung und ein Laser Array, bei dem die Laser kurz an- und ausgeschaltet werden, um ein Bild zu formen.

Im Wertpapierdruck bekannte Verfahren basieren in der Praxis bisher auf Siebdruck, der in der Regel einfarbig aufgebracht wird. Eine Individualisierung des Drucks oder eine Kombination mit anderen Druckverfahren ist nur bedingt möglich. Außerdem ist eine Härtung mit Hilfe von Laserstrahlen sehr aufwändig. In der Praxis ist derzeit mittels Siebdruck keine Kombination von zwei oder mehr Farben erzeugt durch Tinten mit magnetisch ausrichtbaren Pigmenten in einem Druckschritt möglich, die einander benachbart oder miteinander verschachtelt sind.

Eine immer gestellte Aufgabe ist es, die Fälschungssicherheit eines Wertdokuments zu erhöhen. Die Fälschungssicherheit des Wertdokuments wird durch einen individuellen, mehrfarbigen Druck erreicht. Dieser Druck soll außerdem mit einem möglichst geringen Herstellungsaufwand und damit verbundenen möglichst geringen Herstellungskosten aufgebracht werden, um das Verfahren besonders wirtschaftlich zu machen.

Der Erfindung liegt die Aufgabe zugrunde, ein Verfahren zur Herstellung eines Wertdokuments und ein Wertdokument anzugeben, das die Fälschungssicherheit des Wertdokuments verbessert und dabei wirtschaftlich attraktiver ist als bisher bekannte Lösungen.

Die Erfindung ist in den unabhängigen Ansprüchen 1 und 19 definiert. Die abhängigen Ansprüche betreffen bevorzugte Weiterbildungen.

Es ist ein Verfahren zur Herstellung eines Wertdokuments, wie einer Banknote, einem Scheck, einer Kredit- oder sonstige Zahlungskarte, einer Ausweiskarte oder dergleichen vorgesehen. Im Verfahren wird in einem ersten Schritt ein Substratkörper, der eine Vorderseite und eine Rückseite hat, bereitgestellt. Als Substratkörper können Polymersubstrate, wie beispielsweise PET-Substrate, Papiersubstrate, oder kombinierte Papier- und Polymersubstrate eingesetzt werden.

Auf die Vorderseite des Substratkörpers wird in einem zweiten Schritt (Druckschritt) eine Druckschicht mit einer ersten und einer zweiten Tinte, die beide magnetisch ausrichtbare Pigmente aufweisen, aufgedruckt.

Die erste und die zweite Tinte befinden sich in einer gemeinsamen Druckschichtebene und werden bevorzugt beide direkt auf die Vorderseite des Substratkörpers aufgedruckt. Sie befinden sich dann beide nicht in derselben Höhenlage und sind bevorzugt nebeneinander angeordnet.

In einem dritten Schritt (Magnetisierungsschritt) werden die magnetisch ausrichtbaren Pigmente vor ihrer Aushärtung mit einer Magnetvorrichtung ausgerichtet und anschließend in einem vierten Schritt (Aushärtungsschritt) werden die magnetisch ausrichtbaren Pigmente mit einer Aushärtevorrichtung durch Aushärten einer Matrix im ausgerichteten Zustand fixiert.

Im Verfahren ist der Druckschritt zumindest teilweise digitalisiert. Eine zumindest teilweise Digitalisierung des Druckschritts bedeutet, dass die Aufbringung mindestens einer der beiden Tinten statt mit einer Siebdruckmaschine (die üblicherweise für den Banknotendruck verwendet wird), durch Digitaldruck, vorzugsweise durch Tintenstrahldruck auf den Substratkörper erfolgt. Mindestens die erste Tinte wird in einem Digitaldruckprozess mittels eines ersten Druckkopfs gedruckt, der die erste Tinte gemäß einem Punktraster tröpfchenförmig abgibt. So ist die Druckschicht mindestens hinsichtlich der ersten Tinte immer als Digitaldruckschicht ausgebildet. Dabei kann der Abstand und/oder die Position von einzelnen Punkten im Punktraster eingestellt werden.

Für die Druckschicht werden mindestens eine erste Tinte und eine zweite Tinte verdruckt, die beiden magnetisch ausrichtbare Pigmente und unterschiedliche Farben aufweisen. Es werden beispielsweise mehrere Farben in abgegrenzten Bereichen, mehrere Farben in unterschiedlichen Schichtdicken, mehrere Farben mit Farbverlauf oder als Mischfarbe, z.B. gerastert wie im klassischen Fotodruck, aufgebracht. Dies erhöht die Fälschungssicherheit im Vergleich zum klassischen Siebdruck. Es können mit der ersten Tinte Elemente im Digitaldruck aufgebracht werden und mit klassischen Siebdruckelementen, die mit der zweiten Tinte aufgebracht werden, positionsgenau kombiniert werden. Auch dies erhöht die Fälschungssicherheit.

In Ausführungsformen kann die zweite Tinte ebenfalls in einem Digitaldruckprozess mittels eines zweiten Druckkopfs gedruckt werden, der die zweite Tinte gemäß einem Punktraster tröpfchenförmig abgibt, so dass die Druckschicht auch hinsichtlich der zweiten Tinte als Digitaldruckschicht ausgebildet wird. Dabei kann der Abstand und/oder die Position von einzelnen Punkten im Punktraster eingestellt werden. In dieser Ausführungsform kann die Druckschicht aufgrund des Digitaldrucks ein individuelles Bild darstellen, ohne dass eine feste Druckform (wie sie im Siebdruck erforderlich wäre) erforderlich ist. Durch den Verzicht auf eine feste Druckform werden beispielsweise im Falle von Motivwechseln Rüstkosten an der Maschine eingespart und damit die Wirtschaftlichkeit des Verfahrens verbessert. Außerdem wird die Flexibilität der Bilderzeugung erhöht und damit die Fälschungssicherheit zusätzlich verbessert.

Im Verfahren werden magnetisch ausrichtbare Pigmente verwendet, die jeweils einen Mehrschichtverbund umfassen, der mindestens eine magnetische Schicht umfasst. Der Mehrschichtverbund stellt eine Reflexionsschicht dar und umfasst neben der magnetischen Schicht weitere Schichten, wie beispielsweise Dielektrikumsschichten, Reflektorschichten und/oder Absorberschichten. Als Material für die Dielektrikumsschichten sind SiO₂, MgF₂, ZnS oder TiO₂ möglich, die Reflektorschichten bestehen beispielweise aus Aluminium oder Silber, die magnetischen Schichten können beispielsweise aus Nickel, Eisen oder magnetischen Legierungen bestehen, und die Absorberschicht kann beispielsweise eine Chrom- oder Aluminiumschicht sein.

Besonders bevorzugt weisen die magnetisch ausrichtbaren Pigmente einen Mehrschichtverbund auf, bei dem auf eine außen liegende Absorberschicht aus Chrom eine Dielektrikumsschicht aus SiO₂ folgt. Es folgt eine Reflektorschicht aus Aluminium und eine magnetische Schicht aus einer Fe-Si-Legierung.

Zusätzlich kann mindestens einer der beiden Nachfolgeschritte (Magnetisierungsschritt oder Aushärtungsschritt) "ohne feste Form" ausgeführt werden, sodass er je nach Nutzen, also für jedes Wertdokument auf einem Bogen oder einer Substratbahn individualisierbar ist. Man kann auch von einer "Digitalisierung" der Magnetisierung bzw. der Aushärtung sprechen.

Der Magnetisierungsschritt schließt an den Druckschritt an, und zwar bevor die beiden Tinten ausgehärtet sind, sodass die magnetisch ausrichtbaren Pigmente beider Tinten mittels Magneten gezielt und individuell ausgerichtet werden können. Klassisch wird die noch nicht ausgehärtete Druckschicht mittels einer Magnetvorrichtung unmittelbar nach dem Farbauftrag ausgerichtet. Es ist also möglich Elemente, die mit der ersten Tinte im Digitaldruck aufgebracht wurden, mit Elementen, die mit der zweiten Tinte aufgedruckt wurden, gemeinsam zu magnetisieren, unabhängig davon, ob die zweite Tinte via Digitaldruck oder via Siebdruck aufgebracht worden ist. Dies ermöglicht die Einbringung eines durch die Magnetisierung hervorgerufenen optischen Effekts, der sich in Ausführungsformen über Siedruckelemente und Digitaldruckelemente gleichermaßen erstrecken kann.

Bevorzugt wird die Magnetvorrichtung zweidimensional oberhalb oder unterhalb des Substratkörpers gemäß einem Raster bewegt und/oder betätigt, wobei Teilbereiche der Druckschicht individuell digital magnetisiert werden. Statt einer Bewegung der Magnetvorrichtung gemäß einem Raster zweidimensional oberhalb oder unterhalb des Substratkörpers kann man gleichermaßen auch von einer Relativbewegung der Magnetvorrichtung zum Substratkörper oberhalb oder unterhalb desselben sprechen. Auch die Daten für die Magnetisierung werden dabei direkt von der Steuereinheit an die Magnetisierungsvorrichtung übertragen. Besonders bevorzugt weist die Magnetvorrichtung eine Magnetisierungszeile mit einem Array aus mehreren Elektromagneten auf. Auch ist die Kombination mit einem elektromagnetischen Array mit einem elektrischen Magnet oder einem Permanentmagneten möglich, oder es kann ein Magnet auf der Rückseite und/oder auf der Vorderseite eines Druckbogens bzw. einer Substratbahn angeordnet sein. Durch eine gezielte Auswahl von Permanent- und/oder Elektromagneten und deren Lage können die Dichte und Lage der Magnetfeldlinien gezielt beeinflusst werden.

Durch die Positionierung der Magnetvorrichtung oberhalb oder unterhalb des Substratkörpers, ist die Magnetisierung je nach Wertdokument auf einem Bogen oder einer Bahn individualisierbar. Nach der Aufbringung der Druckschicht durchläuft also der Substratkörper als Bogen oder Bahnelement die Magnetvorrichtung, wo die Magnetvorrichtung zweidimensional oberhalb oder unterhalb des Substratkörpers bewegt wird oder alternativ oberhalb oder unterhalb des Substratkörpers positioniert ist und sich nicht bewegt. Die Positionierung der Magnetvorrichtung ist also statisch oder bewegt. Die Bewegung der Magnetvorrichtung erfolgt beispielsweise durch die Verwendung von miniaturisierten motorischen Kreuztischen, beispielsweise ist die Verwendung von Kreuztischen mit Ultraschall-Piezomotoren und einem Stellweg von jeweils 22 mm und einer Fläche von 40x40 mm² in Kombination mit einer Hubtisch 3D-Bewegung möglich. Die Bewegung der Magnetvorrichtung ist an die Geschwindigkeit mit der sich der Substratkörper durch die Anlage bewegt, angepasst.

Es besteht der Bedarf, dass derartige Magnetvorrichtungen möglichst klein ausgestaltet werden. Bevorzugt beträgt der benötigte Bauraum eines geeigneten magnetischen Arrays 7 mm in Breite und Höhe. Mit magnetischen Arrays dieser Größe lassen sich auf 0,2 mm räumlich wirksame Magnetfelder erzeugen. Es werden magnetische Flussdichten von 0,5 T (5.000 Gauß) im Abstand von 0,5 mm erreicht, die zur Ausrichtung der magnetisch ausrichtbaren Pigmente ausreichend sind. Durch diese kompakte Gestaltung der Magnetvorrichtung werden die Herstellkosten reduziert und damit die Wirtschaftlichkeit verbessert.

Zuletzt kann auch die Aushärtung der Druckschicht ohne feste Form, also "digital", erfolgen. Dabei können Teilbereiche der Druckschicht, also Teile der magnetisch ausrichtbaren Pigmente individuell ausgehärtet werden. Auch die Aushärtevorrichtung empfängt dabei die Daten zur Aushärtung direkt von der Steuereinheit. Die Teilbereiche, die ausgehärtet werden können den Teilbereichen, die magnetisiert wurden, entsprechen, es können aber auch andere Teilbereiche ausgehärtet werden, die nicht magnetisiert wurden. Wie schon zur Magnetisierung erläutert, können auch Flächenbereiche, die mit der ersten Tinte aufgedruckt wurden, zusammen mit Flächenbereichen, die mit der zweiten Tinte aufgedruckt wurden, ausgehärtet werden, unabhängig davon, ob die zweite Tinte im Druckschritt via Siebdruck oder via Digitaldruck aufgebracht wurde.

Bevorzugt kann die Aushärtevorrichtung eine Strahlquelle und ein Array von schaltbaren Mikrospiegeln aufweisen und Teilbereiche der Druckschicht werden gemäß einem Raster individuell digital ausgehärtet. Die Teilflächen, die ausgehärtet werden sollen, sind nicht durch feste Blenden oder Optiken fixiert, sondern durch ein Array von schaltbaren Mikrospiegeln gebildet ("ohne feste Form"). Auch ein Array von schaltbaren Leuchtdioden wäre möglich. Mikrospiegel Arrays für UV sind beispielsweise von Texas Instruments, optimiert für den Nah-UV-Produkte (400 bis 420 nm) oder UV-Produkte (< 400 nm), erhältlich. Als Strahlquellen dienen meist LEDs, teilweise auch aufgeweitete Laser, auch eine Einkopplung über einen Lichtleiter ist möglich.

Weiter bevorzugt kann die Aushärtevorrichtung ein Array von schaltbaren Lasern aufweisen und Teilbereiche der Druckschicht können gemäß einem Raster individuell digital ausgehärtet werden. Auch kann die Aushärtevorrichtung eine flächige Strahlquelle, die z.B. aus einem LCD-Schirm besteht, aufweisen, deren Strahlung mit einer Blende und einer Optik auf die Druckschicht geleitet wird und Teilbereiche der Druckschicht gemäß einem Raster individuell digital aushärtet.

Die "Digitalisierung" bzw. Individualisierung jedes der drei Schritte Drucken, Magnetisieren und Aushärten liegt darin, dass auf eine fest eingestellte Form, die auf alle einzelnen Wertdokumente eines Bogens oder eines Bahnelements gleich aufgebracht wird, verzichtet wird. Der Ort des Farbauftrags, der Magnetisierung und der Härtung kann Wertdokument für Wertdokument individuell eingestellt werden. Dabei kann aber jeder Schritt für sich genommen individualisiert werden; d.h. es können bestimmte Flächenbereiche individuell mit der Druckschicht bedruckt werden, dieselben aber auch andere oder überlappende Flächenbereiche können dann im Magnetisierungsschritt individuell magnetisiert werden und dieselben, andere oder überlappende Flächenbereiche können im Aushärtungsschritt individuell ausgehärtet werden. Dies ermöglicht die Erzeugung eines komplexen Bildes, das die Fälschungssicherheit deutlich erhöht.

Bevorzugt werden die zwei Tinten in einem Flächenbereich erster Farbe und einem Flächenbereich zweiter Farbe aufgebracht, wobei die beiden Flächenbereiche besonders bevorzugt direkt aneinander angrenzen. Es sind auch mehrere Teilschichten unterschiedlicher Farbe möglich. Besonders bevorzugt grenzen die Teilschichten direkt aneinander an oder sind miteinander verschachtelt. Im Gegensatz zum im Banknotendruck etablierten Siebdruck-Verfahren ist mit dem Digitaldruck die Aufbringung unterschiedlicher Farben leicht realisierbar. Durch die Geometrie bzw. die Anzahl der Düsen in einem Ink-Jet-Kopf können mehrere Farben zeitgleich aufgebracht werden. Ein besonders fälschungssichernder Effekt wird erreicht durch den Druck optisch variabler magnetisch ausrichtbarer Pigmente mit dynamischen/gegenläufigen Effekten. Es ist bevorzugt auch möglich, zwischen dem Substratkörper und der Druckschicht eine Primerschicht vorzusehen.

Als magnetisch ausrichtbare Pigmente werden bevorzugt plättchenförmige Pigmente mit magnetischer Ausrichtbarkeit verwendet. Die Ausrichtbarkeit dieser Pigmente rührt von einer ferromagnetischen Schicht innerhalb dieser Pigmente her. Die Abmessung der Pigmente liegt bevorzugt im Bereich von 5-50 µm, besonders bevorzugt von 10-25 µm. Derartige magnetisch ausrichtbare Pigmente lassen sich gut mit Tintenstrahldruck verdrucken. Dabei ist es bevorzugt, dass die Pigmente in der Tinte als homogene Dispersion vorliegen.

Die erste und/oder die zweite Tinte ist eine bzw. sind UV-härtende Tinte(n).

Eine typische Formulierung einer (UV-)Tinte mit magnetisch ausrichtbaren Pigmenten, könnte wie folgt aussehen: Als Bindemittel wird ein AcrylCopolymer verwendet, als Lösungsmittel ein Ethylenglykolmonobutylether, ein Ethylenglykolmonomethylether oder ein N-Methylpyrrolidon und als UV-Absorber Benzotriazol. Als Fotoinitiator wird 2-Hydroxy-2-methyl-1-phenylpropan-1-on verwendet, geeignete Pigmente sind z.B. optisch variable Pigmente gemäß eines Fabry Perot Aufbaus, Perlglanz Pigmente, aber auch alle Pigmente mit dem zuvor erläuterten Mehrschichtverbund. Als Additive können Dispergiermittel, Netzmittel oder Rheologie-Modifikatoren verwendet werden. Die genaue Formulierung kann je nach Anwendung, gewünschtem Effekt und Drucksystem variieren. Die magnetisch ausrichtbaren Pigmente sind aber in jedem Fall homogen dispergiert, um eine gleichmäßige Farbgebung und Effektstärke zu gewährleisten. Auch sind die Additive so eingestellt, dass die Tinte gut durch das Drucksystem fließt und eine hohe Druckqualität erzielt wird.

Die Dichte der magnetisch ausrichtbaren Pigmente pro Fläche kann über die Dicke der aufgetragenen Druckschicht variiert werden, sogar lasierender Farbauftrag in einem Muster ist möglich. Dann variiert ein Parametersatz zwischen den beiden in der Druckschicht verwendeten Tinten. Die beiden Tinten können sich in der Dichte der magnetisch ausrichtbaren Pigmente in der Tinte unterscheiden, aber auch mit einem anderen Parametersatz gedruckt werden, indem die eingestellte Auflösung des verwendeten Drucckopfes oder das gedruckte Muster variiert wird. Wird kein durchgehender Farbfilm auf dem Substratkörper erreicht, ist je nach Rauigkeit des Substratkörpers, seiner Saugfähigkeit und der Viskosität der verwendeten Farbe damit zu rechnen, dass dieser Bereich zwar einen Farbwechsel zeigt, sich die Pigmente aber nicht oder zumindest nicht sichtbar in einem Magnetfeld ausrichten lassen. Dies kann in die individuelle Gestaltung des Musters, des Bildes, des Zeichens oder des Codes mit eingehen. Auch Farbverläufe sind möglich.

Da im Digitaldruck keine feste Druckform verwendet wird, kann eine bedruckte Effektfläche extrem genau zu weiteren Druckelementen des Wertdokuments ausgerichtet werden. Eine Kombination des Digitaldrucks mit bekannten Siebdruck Verfahren ist damit unkompliziert möglich. Es ist sogar eine Automatisierung der Ausrichtung durch Bilderfassung des Passers und nachfolgender Korrekturschleife möglich. Auch dies verbessert die Wirtschaftlichkeit des Verfahrens.

Auf eine Ergänzung eines Siebdruckelements (zweite Tinte) mit einem Digitaldruckelement (erste Tinte) können eine individualisierte Magnetisierung und/oder eine individualisierte Aushärtung folgen. Das zusätzlich via Digitaldruck aufgebrachte Element kann dann magnetisiert sein, wohingegen das klassische siebgedruckte Element keine Magnetisierung aufweist. Es kann auch in Teilbereichen unterschiedlich magnetisiert sein und/oder in Teilbereichen auf unterschiedliche Weise ausgehärtet worden sein.

Der Substratkörper kann als Druckbogen, aber auch als Bahnelement gestaltet sein. Im Falle eines Bahnelements ist der Substratkörper eine Papier-, Folien- oder Hybridbahn (Papier-Folien-Verbund), die in einer Maschine als ein einziges Bahnelement über Walzen gezogen wird und dort schrittweise bearbeitet wird - ein Arbeitsschritt folgt dem nächsten auf derselben Substratbahn - die einzelnen Wertdokumente werden erst im letzten Arbeitsschritt von der Substratbahn abgetrennt.

Mit dem Verfahren zur Herstellung eines Wertdokuments können die Druckschritte direkt beim Substrathersteller im Rollenverfahren integriert werden. Der Substratkörper kann also als Bahnelement zur Verfügung gestellt werden - er stellt also eine Rollenware dar - und wird direkt auf der Rolle bedruckt. Auch die weiteren Verfahrensschritte der Magnetisierung und der Aushärtung können dann im Rollenverfahren ablaufen, sodass alle Verfahrensschritte in einer einzigen Maschine und in direkt aneinander anschließenden Arbeitsschritten durchgeführt werden können. Dies verringert den Herstellungsaufwand, reduziert damit die Kosten, und macht das Verfahren daher wirtschaftlich attraktiver als bisher bekannte Verfahren.

Die verwendete Digitaldrucktechnik stellt auch weitere vorteilhafte Möglichkeiten einer Individualisierung zur Verfügung, denn der Digitaldruck ermöglicht es jedes einzelne Wertdokument auf der Substratbahn im Rollenverfahren oder auf einem Substratbogen im Bogendruck individuell zu gestalten. So kann beispielsweise jedes Wertdokument auf der Substratbahn bzw. auf dem Substratbogen ein leicht unterschiedliches Raster, Motiv oder Zifferung enthalten. Es ist auch möglich, dass jedes Wertdokument dasselbe Motiv in der Druckschicht aufweist, das aber in den einzelnen Wertdokumenten auf unterschiedliche Weise magnetisiert und/oder ausgehärtet ist - auch dies verbessert die Individualisierbarkeit einzelner Wertdokumente. Ein weiterer fälschungssichernder Effekt kann beispielsweise dadurch erzielt werden, dass auf jedem Wertdokument auf einem Banknotenbogen oder einer Banknotenbahn dasselbe Motiv via Siebdruck mit der zweiten Tinte aufgedruckt wird und in jedem einzelnen Wertdokument auf dem Bogen bzw. auf der Bahn anders und individuell mit einem Digitaldruckelement, gedruckt mit der ersten Tinte, ergänzt wird.

Wie beschrieben kann die Druckschicht direkt auf den Substratkörper aufgedruckt werden. Der Substratkörper kann aber auch vor seiner Bedruckung mit der Druckschicht vorbehandelt werden. Dazu wird direkt auf den Substratkörper, also unter die Druckschicht eine Primerschicht aufgebracht. Die Primerschicht kann weitere, andere Effekte als die Druckschicht einbringen und bietet den Vorteil, dass sie den Substratkörper glättet (homogenisiert). Auch untergründige Matt-Glanz-Effekte lassen sich mit der Primerschicht erzeugen. Es ist auch möglich, dass die Primerschicht einen sichtbaren Rahmen um das digital gedruckte Sicherheitselement darstellt.

Die Individualisierung mittels der hier geschilderten digitalen Techniken (Druck, Magnetisierung, Aushärtung) kann auch eine positionsgenaue Anordnung zu einer schwankenden Position von Sicherheitsfeatures (Druckmotiv, Wasserzeichen, Faden, Folie) bedeuten.

Es ist ebenfalls ein Wertdokument, wie eine Banknote, ein Scheck, eine Kredit- oder sonstige Zahlungskarte, eine Ausweiskarte oder dergleichen, vorgesehen. Das Wertdokument kann mit dem beschriebenen Verfahren in all seinen Ausführungsformen hergestellt werden. Das Wertdokument weist einen Substratkörper, der eine Vorderseite und eine Rückseite hat, und eine Druckschicht, die mit einer ersten Tinte und einer zweiten Tinte, die beide magnetisch ausrichtbare Pigmente aufweisen, auf die Vorderseite des Substratkörpers aufgedruckt ist, auf. Die magnetisch ausrichtbaren Pigmente sind mit einer Magnetvorrichtung ausgerichtet und mit einer Aushärtevorrichtung durch Aushärten einer Matrix im ausgerichteten Zustand fixiert. Mindestens die erste Tinte ist in einem Digitaldruckprozess mittels eines ersten Druckkopfs gedruckt, der die erste Tinte gemäß einem Punktraster tröpfchenförmig abgibt, so dass die Druckschicht mindestens hinsichtlich der ersten Tinte als Digitaldruckschicht ausgebildet ist. Die erste und die zweite Tinte weisen zwei unterschiedliche Farben auf, und die magnetisch ausrichtbaren Pigmente umfassen jeweils einen Mehrschichtverbund, der mindestens eine magnetische Schicht umfasst.

Es versteht sich, dass das Wertdokument auf dieselben bereits beschriebenen Arten modifiziert werden kann, wie das Verfahren zur Herstellung eines Wertdokuments.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. In den Figuren zeigen:
- Fig. 1: eine schematische Darstellung des Verfahrens zur Herstellung eines Wertdokuments,
- Fig. 2: ein Wertdokument in der Draufsicht,
- Fig. 3: ein weiteres Wertdokument in der Draufsicht,
- Fig. 4: ein weiteres Wertdokument in der Draufsicht,
- Fig. 5: ein Sicherheitselement in der Draufsicht,
- Fig. 6: ein weiteres Wertdokument in der Draufsicht,
- Fig. 7: ein weiteres Wertdokument in der Draufsicht,
- Fig. 8: ein weiteres Wertdokument in der Draufsicht,
- Fig. 9: ein weiteres Wertdokument in der Draufsicht,
- Fig. 10: ein weiteres Wertdokument in der Draufsicht,
- Fig. 11: ein weiteres Wertdokument in der Draufsicht, und
- Fig. 12: ein weiteres Wertdokument in der Draufsicht.

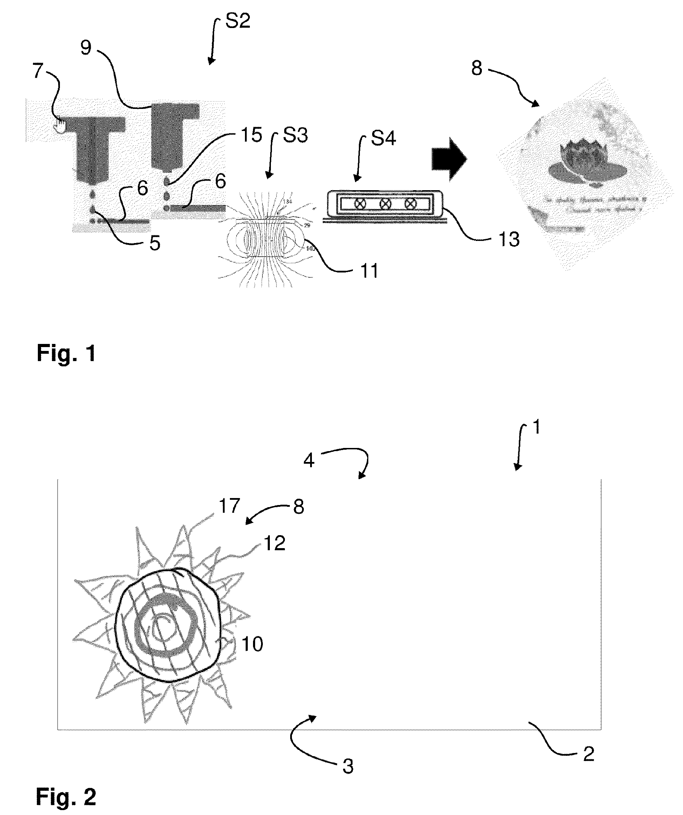

Fig. 1 zeigt den Ablauf eines Verfahrens zur Herstellung eines Wertdokuments 1 in schematischer Darstellung. In einem ersten Schritt S1 (nicht explizit dargestellt) wird ein Substratkörper 2, der eine Vorderseite 3 und eine Rückseite 4 hat, bereitgestellt. In einem zweiten Schritt S2 wird auf die Vorderseite 3 des Substratkörpers 2 eine Druckschicht 6 als Digitaldruckschicht aufgedruckt. Der Aufdruck der Druckschicht 6 erfolgt in einem Digitaldruckprozess mit einem ersten Druckkopf 7 und einem zweiten Druckkopf 9. Der erste Druckkopf 7 gibt eine erste Tinte 5 (rot) und der zweite Druckkopf 9 gibt eine zweite Tinte 15 (blau) tröpfchenförmig ab. Die beiden Tinten 5, 15, die gemeinsam für die Druckschicht 6 verwendet werden, weisen magnetisch ausrichtbare Pigmente auf, die jeweils einen Mehrschichtverbund mit mindestens einer magnetischen Schicht umfassen. In dieser Ausführungsform werden zwar beide Tinten (5, 15) in einem Digitaldruckprozess aufgedruckt, es ist gleichermaßen auch möglich (aber nicht explizit dargestellt), dass die zweite Tinte (15) durch einen klassischen Siebdruckprozess aufgebracht wird und zusammen mit der ersten Tinte 5 die Druckschicht 6 bildet.

In einem dritten Schritt S3 (Magnetisierungsschritt) werden die magnetisch ausrichtbaren Pigmente mit einer Magnetvorrichtung 11 ausgerichtet und in einem vierten Schritt S4 (Aushärtungsschritt) wird die Druckschicht 6 in einer Aushärtevorrichtung 13 ausgehärtet. Die Schritte S2 bis S4 sind in Fig. 1 hintereinander dargestellt, wobei ein Sicherheitselement 8 erzeugt wird.

Im zweiten Schritt S2 werden mindestens die magnetisch ausrichtbaren Pigmente der ersten Tinte 5 nicht mit einer Siebdruckmaschine, sondern durch den eingangs erläuterten Digitaldruck, vorzugsweise Tintenstrahldruck, auf den Substratkörper 2 aufgebracht. Dies ermöglicht es auch magnetische, optisch variable Tinten (OVMIs) mit den magnetisch ausrichtbaren Pigmenten in mehreren Farben und in abgegrenzten Bereichen bspw. mit unterschiedlichen Schichtdicken, mit einem Farbverlauf oder als Mischfarbe, aufzubringen. Die abgegrenzten Bereiche können sogar direkt aneinander anliegen.

Zusätzlich zum zumindest teilweisen Digitaldruck der Druckschicht 6, der ohne feste Druckform durchgeführt wird, kann mindestens einer der Schritte S3 ohne feste Form des Magneten oder S4 ohne vollflächige Bestrahlung ausgeführt werden. D.h. neben dem Digitaldruck kann auch die Magnetisierung und/oder die Aushärtung individuell an den jeweiligen Nutzen angepasst werden. Der Ort des Farbauftrags, der Magnetisierung und der Härtung kann Nutzen für Nutzen auf einem Wertpapierbogen oder einer Wertpapierbahn individuell eingestellt werden. Dabei kann aber jeder Schritt für sich genommen individualisiert werden. Dies verbessert sowohl die Fälschungssicherheit, als auch die Wirtschaftlichkeit, da eine verwendete Druckmaschine baulich nicht umstrukturiert werden muss, wenn bestimmte Nutzen individualisiert werden.

Die Magnetvorrichtung 11 kann beispielsweise zweidimensional oberhalb oder unterhalb des Substratkörpers 2 bewegt werden, um diese Individualisierbarkeit der einzelnen Nutzen zu ermöglichen. Die Bewegung der Magnetvorrichtung ist dabei an die Geschwindigkeit mit der sich der Substratkörper durch die Anlage bewegt, angepasst. Die Magnetvorrichtung 11 kann sich aber auch statisch oberhalb oder unterhalb des Substratkörpers 2 befinden und so betätigt werden, dass die Druckschicht 6 bereichsweise magnetisiert wird.

Die Aushärtevorrichtung 13 kann Teilbereiche der Druckschicht 6 individuell aushärten. Die Teilbereiche, die ausgehärtet werden sollen, werden beispielsweise durch ein Array von schaltbaren Mikrospiegeln in Kombination mit einer Strahlquelle beleuchtet. Die Teilbereiche können den magnetisierten Bereichen entsprechen, es können aber auch andere Teilbereiche sein.

Zur Individualisierung der Magnetisierung und der Aushärtung eignen sich natürlich gleichermaßen alle im allgemeinen Teil genannten Alternativen.

Die Fig. 2 bis 12 zeigen Sicherheitselemente, welche sich mit dem erfindungsgemäßen Verfahren erzeugen lassen.

Fig. 2 zeigt das Wertdokument 1 in der Draufsicht auf die Vorderseite 3. Auf den Substratkörper 2 ist die Druckschicht 6 zweifarbig aufgedruckt. Ein einfarbig mit der ersten Tinte 5 gedrucktes Digitaldruckelement 17 ergänzt ein mit der zweiten Tinte 15 gedrucktes Element 10 aus Siebdruck zur Druckschicht 6 eines Sicherheitselements 8.

In Fig. 2 ist also ein bei Wertdokumenten klassischer Siebdruck mit einem Digitaldruck kombiniert, indem zusätzlich zum Siebdruck-Element 10 mittels Digitaldruck mindestens ein weiteres Digitaldruckelement 17 auf das Wertdokument 1 aufgedruckt wird, sodass das Siebdruck-Element 10 durch das Digitaldruckelement 17 zur Druckschicht 6 gegebenenfalls individuell ergänzt wird, z.B. wie in Fig. 2 durch ein anderes Motiv in einer anderen Farbe. Diese Ergänzung des für jedes Wertdokument 1 auf einem Banknotenbogen bzw. einer Banknotenbahn identische Siebdruck-Element 10 kann im Verfahren durch eine Anpassung des Digitaldruckelements 17 für jedes einzelne Wertdokument 1 individuell eingestellt werden.

Ebenfalls erkennbar ist ein kugelförmiger Effekt 12, welcher durch eine individualisierte Magnetausrichtung erzeugt wird. Obwohl in dieser Ausführungsform zwei unterschiedliche Druckverfahren (Siebdruck und Digitaldruck) verwendet werden, erfolgt eine gemeinsame Magnetisierung und Härtung. Aufgrund der Ausrichtung der magnetisch ausrichtbaren Pigmente kann im Bereich des Digitaldruckelements 17 der kugelförmige Effekt 12 erzeugt werden. Auch kann dieser kugelförmige Effekt 12 nur für einzelne Wertdokumente 1 auf der Banknotenbahn bzw. dem Banknotenbogen erzeugt werden.

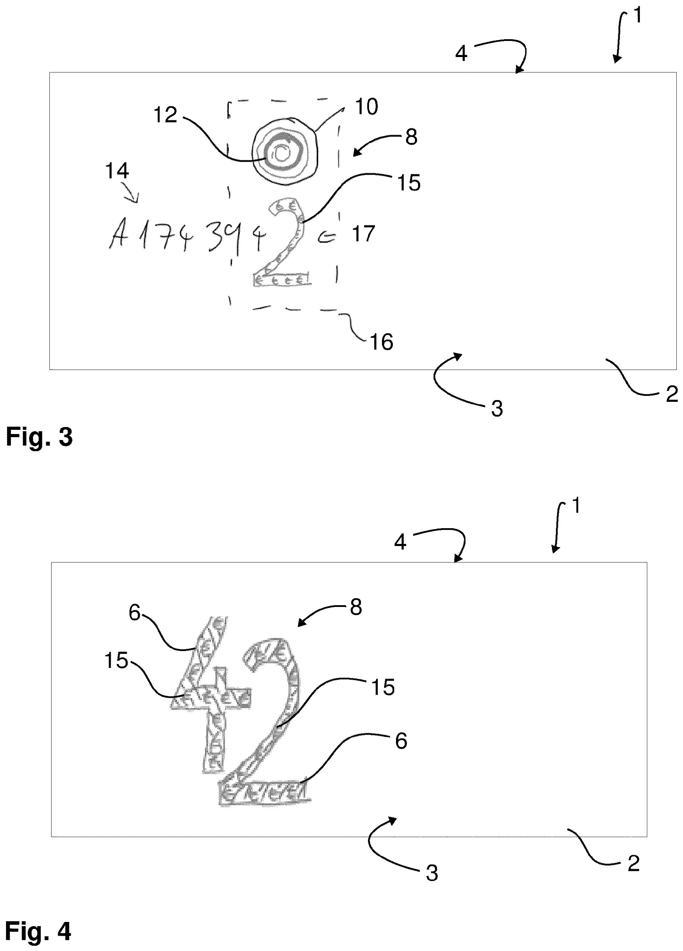

In Fig. 3 ist ebenfalls ein Wertdokument 1 in der Draufsicht dargestellt, bei dem ein Sicherheitselement 8 auf die Vorderseite 3 des Substratkörpers 2 aufgebracht ist. Neben einem Siebdruck-Element 10 mit kugelförmigem Effekt 12 ist eine Zifferung 14 aufgedruckt, wobei die Zahl "2" als Digitaldruckelement 17 aufgebracht und in einem magnetisierten Muster 15, das eine Vielzahl von €-Zeichen aufweist, mit einem Magnet 16 einer Magnetvorrichtung 11 magnetisiert ist. Zur Erhöhung der Fälschungssicherheit ist die Endziffer "2" der Zifferung 14 mit der Magnetisierung versehen. Aufgrund der gemeinsamen digitalisierten Magnetisierung ist es möglich, mit derselben Magnetvorrichtung 11 in der Druckschicht 6 einerseits den kugelförmigen Effekt 12 im Siebdruck-Element 10 und andererseits das magnetische Muster 15 in der im Digitaldruckelement 17 zu erzeugen.

In Fig. 4 ist ebenfalls in der Draufsicht ein Sicherheitselement 8 auf einem Wertdokument 1 dargestellt. Als Druckschicht 6 ist die Zahl "42" mehrfarbig aufgedruckt und anschließend mit einem Magneten 16 einer Magnetvorrichtung 11 in beiden Ziffern mit einem magnetischen Muster 15 aus €-Zeichen versehen. In dieser Ausführungsform sind also beide Tinten 5, 15 in einem Digitaldruckprozess aufgedruckt. Die Mehrfarbigkeit der Zahl und/oder das magnetisierte Muster 15 innerhalb der Zahl sind von Wertdokument 1 zu Wertdokument 1 auf einem Banknotenbogen oder einer Substratbahn individuell einstellbar. Eine Anpassung der Farbe für weitere Wertdokumente 1 ist in einer Siebruckmaschine nur sehr aufwändig möglich, indem eine vertikale Trennung in einem gewissen Abstand zwischen den Farbteilen vorgesehen ist oder mit einer Zwischentrocknung und einem zweiten Sieb gearbeitet wird. Der Digitaldruck verringert daher den Herstellungsaufwand und damit die Herstellungskosten.

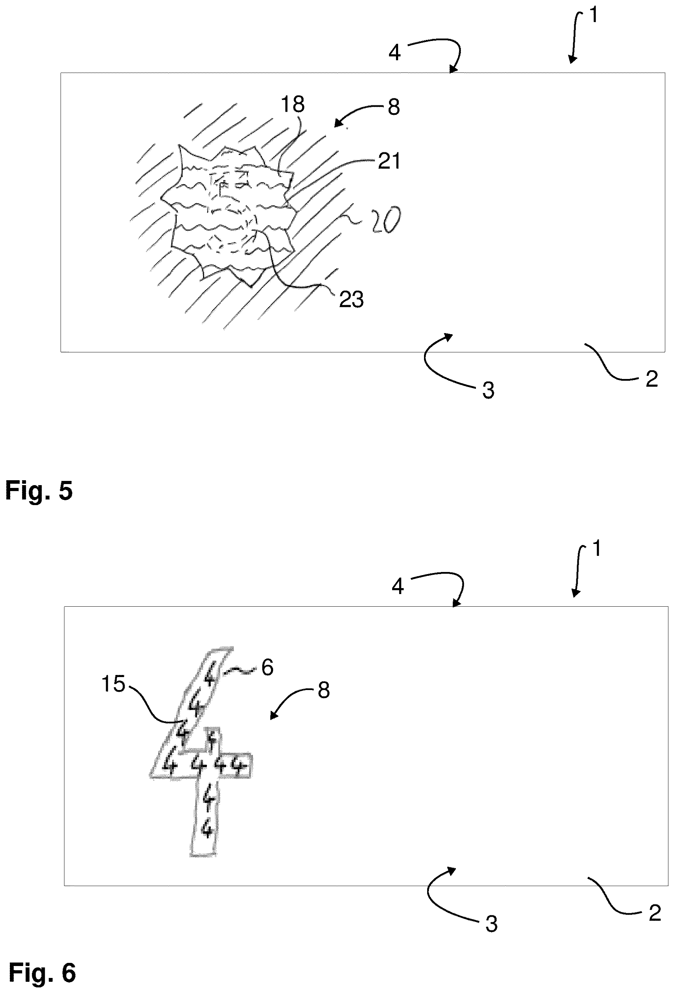

Fig. 5 zeigt ein weiteres Sicherheitselement 8 in der Draufsicht. Es ist einer andere Anwendung des Begriffes "unterschiedliche Farbe" im Sinne von zwei unterschiedlichen Parametersätzen dargestellt, auch wenn das gleiche Pigment verwendet wird. Auf die Vorderseite 3 des Substratkörpers 2 ist ein Untergrunddruck 20 aufgedruckt. Auf diesen Untergrunddruck 20 ist das Sicherheitselement 8 mit einem magnetisierten Muster 21 aufgebracht.

In einem ersten Schritt wurde ein erster Bereich 18 des Sicherheitselements 8 mit der ersten Tinte 5 digital gedruckt. Dafür wurde ein bestimmter Parametersatz verwendet, der z.B. aus der Dichte der magnetisch ausrichtbaren Pigmente in der ersten Tinte 5, der eingestellten Auflösung des dafür benutzten ersten Druckkopfs 7, des gedruckten Musters (ggf. mit einem bestimmten Raster mit einer bestimmten Rasterweite, etc. besteht. Es wird in diesem Schritt vor allem auf eine gute Abdeckung des Untergrunddrucks 20 und der Substratoberfläche geachtet und auf eine ausreichend dicke Druckschicht, damit sich die Pigmente gut ausrichten lassen und der gewünschte Effekt gut sichtbar wird.

Ein zweiter Bereich 23 ist mit der zweiten Tinte 15 gedruckt und stellt eine "5" dar. Dieser zweite Bereich 23 wurde beim Druck mit der ersten Tinte 5 ausgespart und wird im Folgeschritt mit einem zweiten Parametersatz gedruckt, der z.B. aufgrund einer geringer pigmentierten zweiten Tinte 15 und/oder aufgrund einer geringeren Auflösung am zweiten Druckkopf 9 und/oder aufgrund einer gröberen Rasterung zu einem nicht deckenden, sondern lasierenden Eindruck führt, bei dem der Hintergrunddruck 20 noch leicht durchscheint. Es folgen die Schritte der Magnetisierung und der Aushärtung. Da der zweite Bereich 23 eine geringere Dichte der magnetisch ausrichtbaren Pigmente aufweist, ist in diesem zweiten Bereich 23 der durch die Magnetisierung erreichte Effekt kaum sichtbar und unterstützt durch einen geringeren Farbeindruck wird sich der zweite Bereich 23 vom ersten Bereich 18 unterscheiden. Bei diesem Vorgehen ist es nicht notwendig, einen individuellen Härtungsschritt für die "5" vorzunehmen. Es kann eine Gesamthärtung erfolgen.

In Fig. 6 ist die Draufsicht auf ein weiteres Wertdokument 1 mit einem Sicherheitselement 8 dargestellt. Es ist eine individuelle "4" zweifarbig als Druckschicht 6 mit den beiden Tinten 5, 15 aufgebracht und mit einem individuellen magnetisierten Muster 15 in Form von "4ern" belegt. Das Sicherheitselement 8 der Fig. 6 stellt eine Kombination von digitalem Farbauftrag und digitaler Magnetisierung bei fester Aushärtung dar.

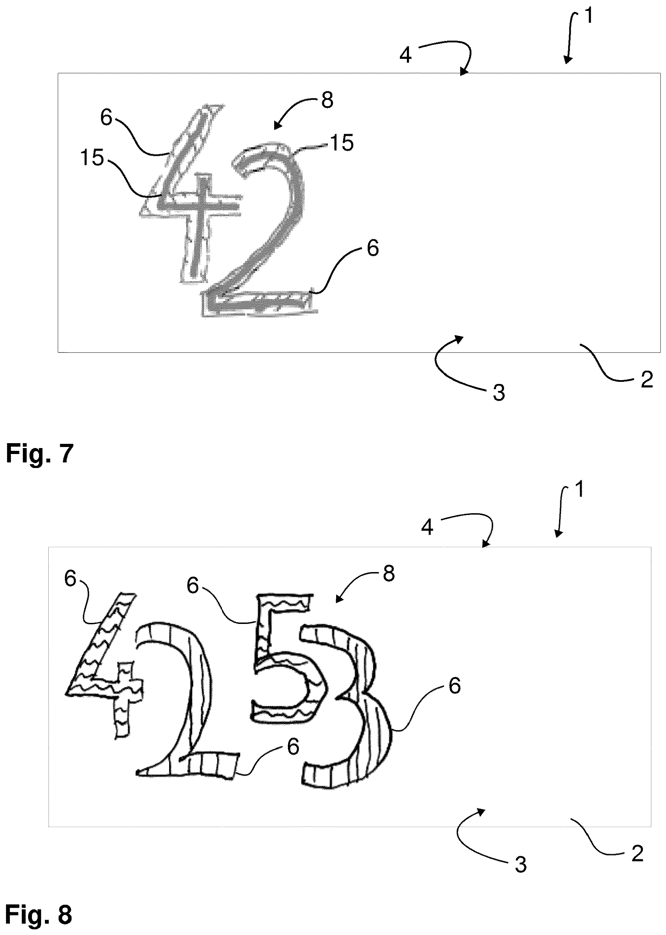

Fig. 7 stellt die Draufsicht auf ein weiteres Wertdokument 1 dar, auf dem ein Sicherheitselement 8 in Form einer zweifarbigen Druckschicht 6 dargestellt ist. Es sind zweierlei Effektfarben in aneinander angrenzenden Bereichen als Druckschicht 6 mit den beiden Tinten 5, 15 aufgebracht (Bereich 1: "4"; Bereich 2: "2"). Ein individualisiertes magnetisches Muster 15 mit unterschiedlicher Bebilderung, auch von Wertdokument 1 zu Wertdokument 1, ist in den Bereichen möglich. Ein weiteres mögliches Beispiel wäre ein "Tik-Tak-Toe", bei dem auf einem Schachbrettmuster Kreise und Kreuze als magnetisches Muster 15 individuell verteilt sind.

Auch die Fig. 8 zeigt die Draufsicht auf ein Wertdokument 1 mit einem aufgebrachten Sicherheitselement 8. Es ist die Kombination einer Druckschicht 6, zweifarbig gedruckt mit den beiden Tinten 5, 15, in Form der Zahlenfolge "4253" dargestellt, wobei die einzelnen Ziffern der Zahlenfolge individuell ausgehärtet wurden. Die Druckschicht 6 ist nur in den Bereichen der Zahlen "4" und "5" ausgehärtet. Die Bereiche der Zahlen "2" und "3" wurden noch ungehärtet mit einem anderen, sich wiederholenden Muster magnetisiert. Im Anschluss erfolgte die Gesamthärtung. Eine derartige individuelle Aushärtung kann auch von Wertdokument 1 zu Wertdokument 1 auf einem Banknotenbogen oder einer Substratbahn unterschiedlich sein.

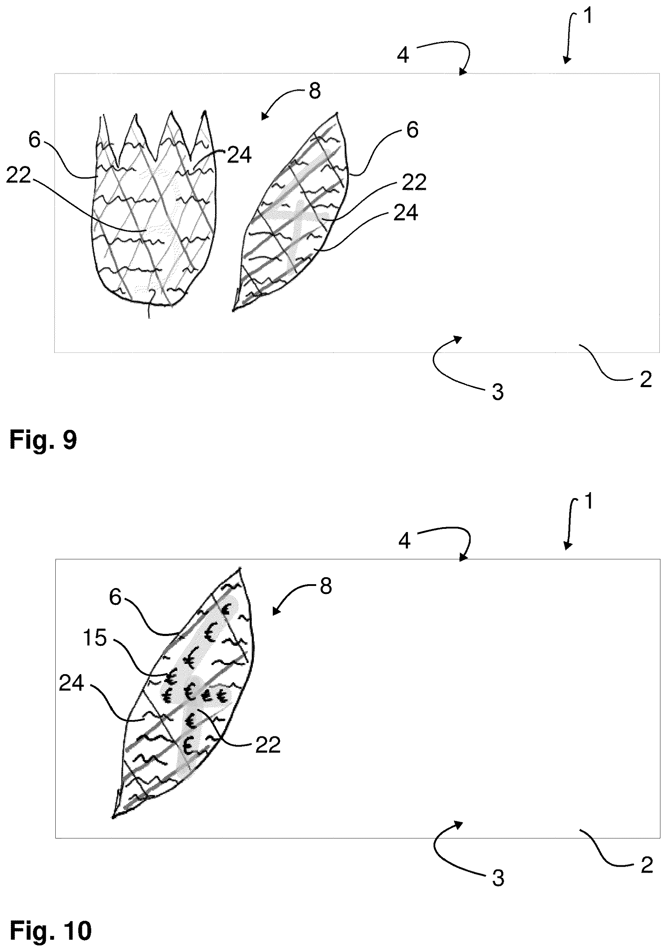

Fig. 9 zeigt ein Wertdokument 1 in der Draufsicht. Ein Sicherheitselement 8 ist auf der Vorderseite 3 aufgebracht. Eine Druckschicht 6 ist in Form einer Blume und eines Blattes zweifarbig mit den beiden Tinten 5, 15 aufgedruckt, wobei eine individuelle Vorhärtung in Form eines gehärteten Musters 22 als Zahlen "3" und "4" eingebracht ist. Die übrigen, ungehärteten Bereiche der Blume bzw. des Blattes wurden mit einer individuellen Bereichsmagnetisierung 24 versehen, indem die Bereiche wunschgemäß ausgerichtet wurden; abschließend erfolgte die Gesamthärtung.

In einer Zifferung 14 wäre es beispielsweise möglich, jede Ziffer mit einem unterschiedlichen Bild zu versehen und die einzelnen Ziffern wie zu Fig. 9 beschrieben zu erzeugen.

In Fig. 10 ist ein Wertdokument 1 mit einem Sicherheitselement 8 in der Draufsicht dargestellt. Es ist in einer zweifarbigen Druckschicht 6 gebildeten Muster in Form eines Blattes die Ziffer "4" in einem gehärteten Muster 22 gebildet und mit einem magnetisierten Muster 15 aus €-Zeichen magnetisiert. Das magnetisierte Muster 15 wird anschließend (individuell in Form der Ziffer "4") ausgehärtet und ist damit in einer Matrix fixiert. Anschließend erfolgt wie zu Fig. 9 erläutert die Magnetisierung der noch nicht ausgehärteten übrigen Bereiche des Blattes und eine abschließende Gesamthärtung.

Ein besonders hervorzuhebendes Sicherheitselement 8 wäre z.B. ein "Fensterfaden", der in das Substrat eingebettet ist und in von der Substratoberfläche freigehaltenen "Fenstern" besonders auffällige Effekte zeigt. Da diese Fäden absichtlich über einen gewissen streifenförmigen Bereich über die Breite von Banknoten verteilt werden, um einen möglichst ebenen Banknoten- bzw. Bogenstapel zu erreichen, ist ihre Lage und damit die der Fenster in jeder einzelnen Banknote etwas anders.

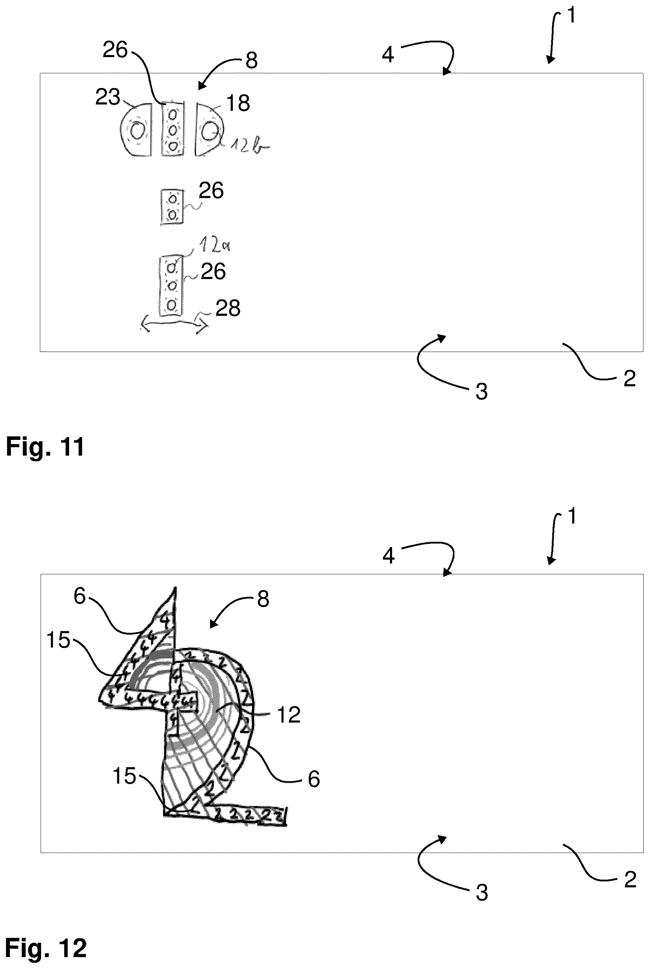

Figur 11 zeigt nun ein Wertdokument 1 in Form einer Banknote in der Draufsicht auf die Vorderseite 3. An der Vorderseite 3 sind Fenster 26 vorgesehen, aus denen ein erster kugelförmiger Bewegungseffekt 12a herausscheint. Die Lage der Fenster 26 bzgl. der Breite der Banknote kann um den Schwankungsbereich 28 von Banknote zu Banknote schwanken. Auch bzgl. der Höhe der Banknote sind Schwankungen möglich.

Die Lage der Fenster 26 wird von einem geeigneten Sensor, z.B. einer Kamera, erkannt und zusammen mit der Lageänderung der durch die Digitaldruckvorrichtung hindurch bewegten Banknote, die noch Bestandteil eines Bogens oder einer Substratbahn ist, als Steuersignal für die Druckvorrichtung verwendet. Diese platziert anschließend das zweifarbige und zweiteilige Sicherheitselement 8 mit einem ersten Bereich 18 aus einer ersten Tinte 5 und einem zweiten Bereich 23 aus einer zweiten Tinte 15 rechts und links vom oberen Fenster 26 so, dass das Fenster 26 horizontal mittig zwischen den beiden Bereichen 18, 23 des Sicherheitselements 8 zu liegen kommt. Das Sicherheitselement 8 zeigt dabei einen zweiten kugelförmigen Bewegungseffekt 12b, der dem ersten kugelförmigen Bewegungseffekt 12a des Fensterfadens ähnelt. Auf diese Weise wird die Lage des Sicherheitselements für jedes einzelne Wertdokument individuell optimiert.

In Fig. 12 ist ein weiteres Wertdokument 1 mit einem Sicherheitselement 8 in der Draufsicht dargestellt. Zur Erzeugung des Motivs sind alle drei Schritte (Druck, Magnetisierung, Aushärtung) individualisiert. Das Motiv ist in zwei Farben gedruckt, individuell magnetisiert und in einer ersten (individuellen) Teilhärtung ausgehärtet. Es schließt eine zweite Magnetisierung und eine Gesamthärtung an (ggf. Zwischenschritt: Gleichrichtung der Magnetisierung im ungehärteten Bereich durch flächigen Permanentmagnet oder "Löschung" durch schnell wechselndes Feld durch einen speziell ausgebildeten Magnetkopf, einen sogenannten "Löschkopf".

Die beschriebenen Effekte können ideal gepassert mit einem weiteren Effekt, bspw. einem weiteren Sicherheitselement 8, z.B. einer lumineszierenden Umrandung, die erst bei Bestrahlung mit UV-Licht sichtbar wird, kombiniert werden. Diese weiteren Elemente können ebenfalls mit dem Tintenstrahldruck aufgebracht werden. Auch ist die individuelle Aufbringung einer Primer-Schicht mit etwas größeren Konturen möglich, sodass ein Rand um das Motiv entsteht. Auch eine zusätzliche Maschinenlesbarkeit ist möglich: Zumindest eine weitere via Digitaldruck aufgebrachte Farbe kann Komponenten enthalten, die als Individualisierung nur mit speziellen Sensoren ausgelesen werden können. Die Individualisierung mittels der hier geschilderten digitalen Techniken (Druck, Magnetisierung, Aushärtung) kann auch eine positionsgenaue Anordnung zu einer schwankenden Position von Sicherheitsfeatures (Druckmotiv, Wasserzeichen, Faden, Folie) bedeuten.

Die Erfindung betrifft ein Verfahren zur Herstellung eines Wertdokuments 1, wie einer Banknote, einem Scheck, einer Kredit- oder sonstige Zahlungskarte, einer Ausweiskarte oder dergleichen. Es wird ein Substratkörper 2, der eine Vorderseite 3 und eine Rückseite 4 hat, bereitgestellt, und eine Druckschicht 6 wird mit einer ersten Tinte 5 und einer zweiten Tinte 15, die beide magnetisch ausrichtbare Pigmente aufweisen, auf die Vorderseite 3 des Substratkörpers 2 aufgedruckt. Die magnetisch ausrichtbaren Pigmente werden mit einer Magnetvorrichtung 11 ausgerichtet und anschließend mit einer Aushärtungsvorrichtung 13 durch Aushärten einer Matrix im ausgerichteten Zustand fixiert.-Mindestens die erste Tinte 5 wird in einem Digitaldruckprozess mittels eines ersten Druckkopfs 7 gedruckt, der die erste Tinte 5 gemäß einem Punktraster tröpfchenförmig abgibt, so dass die Druckschicht 6 mindestens hinsichtlich der ersten Tinte 5 als Digitaldruckschicht ausgebildet wird, wobei die erste Tinte 5 und die zweite Tinte 15 zwei unterschiedliche Farben aufweisen, und die magnetisch ausrichtbaren Pigmente jeweils einen Mehrschichtverbund umfassen, der mindestens eine magnetische Schicht umfasst.

### Bezugszeichenliste

- 1: Wertdokument
- 2: Substratkörper
- 3: Vorderseite
- 4: Rückseite
- 5: erste Tinte
- 6: Druckschicht
- 7: erster Druckkopf
- 8: Sicherheitselement
- 9: zweiter Druckkopf Siebdruck-Element
- 10 11: Magnetvorrichtung
- 12: kugelförmiger Effekt
- 12a: erster kugelförmiger Bewegungseffekt
- 12b: zweiter kugelförmiger Bewegungseffekt
- 13: Aushärtevorrichtung
- 14: Zifferung
- 15: zweite Tinte
- 16: Magnet
- 17: Digitaldruckelement
- 18: erster Bereich
- 20: Untergrunddruck
- 21: magnetisiertes Muster
- 22: gehärtetes Muster
- 23: zweiter Bereich
- 24: Bereichsmagnetisierung
- 26: Fenster
- 28: Schwankungsbereich
- S1: erster Schritt
- S2: zweiter Schritt
- S3: dritter Schritt
- S4: vierter Schritt

## Patentansprüche

1. Verfahren zur Herstellung eines Wertdokuments (1), wie einer Banknote, einem Scheck, einer Kredit- oder sonstige Zahlungskarte, einer Ausweiskarte oder dergleichen, wobei
- ein Substratkörper (2), der eine Vorderseite (3) und eine Rückseite (4) hat, bereitgestellt wird,
- eine Druckschicht (6) mit einer ersten Tinte (5) und einer zweiten Tinte (15), die beide magnetisch ausrichtbare Pigmente aufweisen, auf die Vorderseite (3) des Substratkörpers (2) aufgedruckt wird, und
- die magnetisch ausrichtbaren Pigmente mit einer Magnetvorrichtung (11) ausgerichtet und anschließend mit einer Aushärtungsvorrichtung (13) durch Aushärten einer Matrix im ausgerichteten Zustand fixiert werden,
**dadurch gekennzeichnet, dass**
- mindestens die erste Tinte (5) in einem Digitaldruckprozess mittels eines ersten Druckkopfs (7) gedruckt wird, der die erste Tinte (5) gemäß einem Punktraster tröpfchenförmig abgibt, so dass die Druckschicht (6) mindestens hinsichtlich der ersten Tinte (5) als Digitaldruckschicht ausgebildet wird, wobei die erste Tinte (5) und die zweite Tinte (15) zwei unterschiedliche Farben aufweisen, und
- die magnetisch ausrichtbaren Pigmente jeweils einen Mehrschichtverbund umfassen, der mindestens eine magnetische Schicht umfasst.

2. Verfahren nach Anspruch 1, **dadurch gekennzeichnet, dass** die zweite Tinte (15) ebenfalls in einem Digitaldruckprozess mittels eines zweiten Druckkopfs (9) gedruckt wird, der die zweite Tinte (15) gemäß einem Punktraster tröpfchenförmig abgibt, so dass die Druckschicht (6) auch hinsichtlich der zweiten Tinte (15) als Digitaldruckschicht ausgebildet wird.

3. Verfahren nach einem der obigen Ansprüche, **dadurch gekennzeichnet, dass** die Magnetvorrichtung (11) zweidimensional oberhalb oder unterhalb des Substratkörpers (2) gemäß einem Raster bewegt und/oder betätigt wird, wobei Teilbereiche der Druckschicht (6) individuell digital magnetisiert werden.

4. Verfahren nach einem der obigen Ansprüche, **dadurch gekennzeichnet, dass** die Magnetvorrichtung (11) eine Magnetisierungszeile mit einem Array aus mehreren Elektromagneten aufweist.

5. Verfahren nach einem der obigen Ansprüche, **dadurch gekennzeichnet, dass** die Magnetvorrichtung (11) auf 0,2 mm räumlich begrenzte Magnetfelder erzeugt und mindestens eine magnetische Flussdichte von 5.000 Gauß im Abstand von 0,5 mm erreicht.

6. Verfahren nach einem der obigen Ansprüche, **dadurch gekennzeichnet, dass** die Aushärtevorrichtung (13) eine Strahlquelle und ein Array von schaltbaren Mikrospiegeln aufweist und Teilbereiche der Druckschicht (6) gemäß einem Raster individuell digital ausgehärtet werden, oder die Aushärtevorrichtung (13) ein Array von schaltbaren Lasern aufweist und Teilbereiche der Druckschicht (6) gemäß einem Raster individuell digital ausgehärtet werden, oder die Aushärtevorrichtung (13) eine flächige Strahlquelle aufweist, deren Strahlung mit einer Blende und einer Optik auf die Druckschicht (6) geleitet wird und Teilbereiche der Digitaldruckschicht (6) gemäß einem Raster individuell digital ausgehärtet werden.

7. Verfahren nach einem der obigen Ansprüche, **dadurch gekennzeichnet, dass** zwischen dem Substratkörper (2) und der Druckschicht (6) eine Primerschicht vorgesehen wird.

8. Verfahren nach einem der obigen Ansprüche, **dadurch gekennzeichnet, dass** die zwei Tinten (5, 15) in einem Flächenbereich erster Farbe und einem Flächenbereich zweiter Farbe aufgebracht werden, wobei die beiden Flächenbereiche direkt aneinander angrenzen oder miteinander verschachtelt sind.

9. Verfahren nach einem der obigen Ansprüche, **dadurch gekennzeichnet, dass** die erste Tinte (5) und/oder die zweite Tinte (15) eine UV-härtende Tinte ist, und/oder die magnetische ausrichtbaren Pigmente eine Pigmentgröße von 5-50 µm, besonders bevorzugt von 10-25 µm aufweisen, und/oder die magnetisch ausrichtbaren Pigmente plättchenförmig sind.

10. Verfahren nach einem der obigen Ansprüche, **dadurch gekennzeichnet, dass** die Druckschicht (6) unterschiedliche Parameter aufweist.

11. Verfahren nach einem der obigen Ansprüche, **dadurch gekennzeichnet, dass** der Abstand und/oder die Position von einzelnen Punkten im Punktraster eingestellt wird.

12. Verfahren nach einem der obigen Ansprüche, **dadurch gekennzeichnet, dass** eine Geschwindigkeit einer Bewegung der Magnetvorrichtung (11) an eine Geschwindigkeit mit der der Substratkörper (2) durch eine Fertigungsmaschine bewegt wird, angepasst wird.

13. Verfahren nach einem der obigen Ansprüche, **dadurch gekennzeichnet, dass** der Substratkörper (2) als Bahnelement aus Papier oder Folie oder Papier/Folienverbundmaterial bereitgestellt wird.

14. Verfahren nach Anspruch 13, **dadurch gekennzeichnet, dass** alle Fertigungsschritte auf dem Bahnelement ausgeführt werden und dieses erst nach dem Aushärtungsschritt in Wertdokumente (1) vereinzelt wird.

15. Wertdokument, wie eine Banknote, ein Scheck, eine Kredit- oder sonstige Zahlungskarte, eine Ausweiskarte oder dergleichen, das insbesondere nach einem Verfahren gemäß einem der obigen Ansprüche hergestellt ist, wobei das Wertdokument (1) aufweist:
- einen Substratkörper (2), der eine Vorderseite (3) und eine Rückseite (4) hat, und
- eine Druckschicht (6), die mit einer ersten Tinte (5) und einer zweiten Tinte (15), die beide magnetisch ausrichtbare Pigmente aufweisen, auf die Vorderseite (3) des Substratkörpers (2) aufgedruckt ist, und
- die magnetisch ausrichtbaren Pigmente mit einer Magnetvorrichtung (11) ausgerichtet und mit einer Aushärtungsvorrichtung (13) durch Aushärten einer Matrix im ausgerichteten Zustand fixiert sind,
**dadurch gekennzeichnet, dass**
- mindestens die erste Tinte (5) in einem Digitaldruckprozess mittels eines ersten Druckkopfs (7) gedruckt ist, der die erste Tinte (5) gemäß einem Punktraster tröpfchenförmig abgibt, so dass die Druckschicht (6) mindestens hinsichtlich der ersten Tinte (5) als Digitaldruckschicht ausgebildet ist, wobei die erste Tinte (5) und die zweite Tinte (15) zwei unterschiedliche Farben aufweisen, und
- die magnetisch ausrichtbaren Pigmente jeweils einen Mehrschichtverbund umfassen, der mindestens eine magnetische Schicht umfasst.
